# EUROPÄISCHE PATENTSCHRIFT

(11) **EP 3 492 785 B1**
(45) Veröffentlichungstag und Bekanntmachung des Hinweises auf die Patenterteilung: **30.09.2020**
(21) Anmeldenummer: 18207441.9
(22) Anmeldetag: 21.11.2018
(51) Int. Cl.: F16J 15/3228

(54) **DICHTRING UND DICHTUNGSANORDNUNG, DIE EINEN SOLCHEN DICHTRING UMFASST**
SEALING RING AND SEAL ARRANGEMENT COMPRISING SUCH A SEALING RING
ANNEAU D'ÉTANCHÉITÉ ET DISPOSITIF D'ÉTANCHÉITÉ COMPRENANT UN TEL ANNEAU D'ÉTANCHÉITÉ

(30) Priorität: 01.12.2017 DE 102017011117
(43) Veröffentlichungstag der Anmeldung: 05.06.2019
(73) Patentinhaber: Carl Freudenberg KG, 69469 Weinheim (DE)
(72) Erfinder: Heldmann, Martin, 64678 Lindenfels (DE); Hintenlang, Günter, 69518 Abtsteinach (DE); Hofmann, Jens, 68305 Mannheim (DE)

(56) Entgegenhaltungen:
- DE-A1-102011 002 491
- US-A- 2 358 536
- US-A- 5 269 539

## Beschreibung

### Technisches Gebiet

Die Erfindung betrifft einen Dichtring und eine Dichtungsanordnung, die einen solchen Dichtring umfasst.

Der Dichtring, umfasst einen Stützkörper und eine Dichtlippe mit zumindest einem ersten und einem zweiten Dichtlippenabschnitt aus voneinander abweichenden Dichtungswerkstoffen, wobei der erste Dichtlippenabschnitt einerseits mit dem Stützkörper verbunden ist und andererseits ein freies Ende aufweist, an dem der zweite Dichtlippenabschnitt angeordnet ist und wobei der zweite Dichtlippenabschnitt aus einem elastomeren Dichtungswerkstoff besteht, wobei der erste Dichtlippenabschnitt auf der einer abzudichtenden Oberfläche eines abzudichtenden ersten Maschinenelements radial zugewandten Seite eine erste Förderstruktur zur Förderung von abzudichtendem Medium aufweist. Außerdem betrifft die Erfindung eine Dichtungsanordnung, die einen solchen Dichtring umfasst.

### Stand der Technik

Ein solcher Dichtring und eine solche Dichtungsanordnung sind zum Beispiel aus der DE 103 13 958 A1 bekannt. Der zweite Dichtlippenabschnitt weist auf der einer abzudichtenden Oberfläche eines abzudichtenden ersten Maschinenelements radial zugewandten Seite und auf der dem ersten Dichtlippenabschnitt axial abgewandten Seite einen umfangsseitig umlaufenden, verdickten und in sich geschlossenen Dichtwulst auf. Durch den Dichtwulst wird die erste Förderstruktur im Bereich des freien Endes verschlossen. Der Dichtwulst verhindert eine Leckage des abzudichtenden Mediums bei Stillstand des ersten Maschinenelements.

Der erste Dichtlippenabschnitt weist auf der der abzudichtenden Oberfläche des abzudichtenden ersten Maschinenelements radial abgewandten Seite über den Umfang verteilt angeordnete und sich in axialer Richtung erstreckende Rippen auf, zur Vergrößerung der Oberfläche der Dichtlippe. Dadurch wird Reibungswärme aus der Dichtlippe besser abgeführt; die Dichtlippe wird dadurch besser gekühlt.

Der erste Dichtlippenabschnitt besteht bei dem vorbekannten Dichtring bevorzugt aus einem PTFE-Compound.

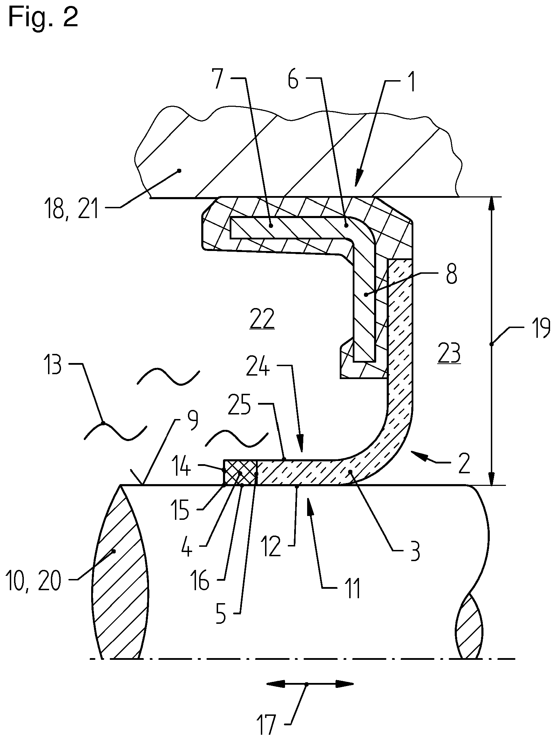

Ein weiterer Dichtring und eine weitere Dichtungsanordnung, in der der weitere Dichtring zur Anwendung gelangt, sind aus der DE 10 2011 002 491 A1 bekannt. Der Dichtring umfasst einen Stützkörper und eine Dichtlippe mit einem ersten und einem zweiten Dichtlippenabschnitt aus voneinander abweichenden Dichtungswerkstoffen. Der erste Dichtlippenabschnitt, der ein abzudichtendes Maschinenelement außenumfangsseitig dichtend umschließt, besteht aus einem nicht-elastomeren Material, beispielsweise aus PTFE. Der zweite Dichtlippenabschnitt ist in Figur 2 durch ein Elastomerteil mit einer statischen Dichtlippe gebildet, die als in sich geschlossener Dichtwulst ausgebildet ist. Der Dichtwulst ist auf der der abzudichtenden Oberfläche eines abzudichtenden ersten Maschinenelements radial zugewandten Seite und auf der dem ersten Dichtlippenabschnitt axial abgewandten Seite des zweiten Dichtlippenabschnitts angeordnet. Der erste Dichtlippenabschnitt weist auf seiner der abzudichtenden Oberfläche des abzudichtenden ersten Maschinenelements radial zugewandten Seite eine erste Förderstruktur zur Förderung von abzudichtendem Medium auf. Der erste Dichtlippenabschnitt ist radial außenumfangsseitig von Elastomerstegen überdeckt, die gleichmäßig in Umfangsrichtung verteilt angeordnet sind und sich in axialer Richtung erstrecken.

Aus der US 5,269,539 sind ein Dichtring und eine Dichtungsanordnung bekannt. Der Dichtring umfasst einen Stützkörper und eine Dichtlippe mit zwei Dichtlippenabschnitten aus voneinander abweichenden Dichtungswerkstoffen, wobei der erste Dichtlippenabschnitt mit dem Stützkörper verbunden ist und ein freies Ende aufweist, an dem der zweite Dichtlippenabschnitt angeordnet ist und wobei beide Dichtlippenabschnitte aus einem elastomeren Dichtungswerkstoff bestehen.

Die beiden Dichtlippenabschnitte sind durch ein cross-linking-Verfahren stoffschlüssig miteinander verbunden.

Die Aufgabe, die dem vorbekannten Dichtring zugrunde liegt, wird darin gesehen, dass dieser kostengünstiger herstellbar ist. Dazu ist es vorgesehen, dass einer der Dichtlippenabschnitte aus einem, bezogen auf den anderen Dichtlippenabschnitt, kostengünstigeren Werkstoff besteht; der teure Werkstoff gelangt nur dort zur Anwendung, wo es aus technischer Sicht erforderlich ist. Der Dichtring umfasst außerdem eine Ringwendelfeder, die die Dichtlippe im Bereich ihrer Dichtkante außenumfangsseitig umschließt. Die Ringwendelfeder ist in einer nutförmigen Ausnehmung der Dichtlippe angeordnet. Rückförderstrukturen zur Rückförderung von abzudichtendem Medium in den abzudichtenden Raum der Dichtungsanordnung sind in der genannten Druckschrift nicht offenbart.

In der US 5,183,271 ist ein weiterer Dichtring offenbart, der einen Bestandteil einer Dichtungsanordnung bildet. Der Dichtring entspricht im Wesentlichen dem Dichtring aus der zuvor beschriebenen DE 10 2011 002 491 A1. Der zweite Dichtlippenabschnitt besteht aus einem elastomeren Werkstoff, ist am freien Ende des ersten Dichtlippenabschnitts angeordnet und umschließt das abzudichtende erste Maschinenelement mit einer Dichtlippe mit radialer Vorspannung dichtend.

Aus der US 2,358,536 ist ein weiterer Dichtring bekannt, der eine Dichtlippe umfasst, deren freies Ende, im Querschnitt betrachtet, in einem klammerförmigen Führungselement aufgenommen ist. Das Führungselement folgt zusammen mit der Dichtlippe möglichen Exzentrizitäten des abzudichtenden Maschinenelements und verhindert dadurch eine mechanische Überbeanspruchung der Dichtlippe.

Außerdem sind Dichtringe und Dichtungsanordnungen bekannt, wobei das erste Maschinenelement durch eine abzudichtende Welle gebildet ist und das zweite Maschinenelement durch ein die Welle umschließendes Gehäuse.

Das erste Maschinenelement kann dabei durch eine abzudichtende Welle gebildet sein, das zweite Maschinenelement durch ein die Welle umschließendes Gehäuse. Das Gehäuse, die Welle und der Dichtring begrenzen einen abzudichtenden Raum gegenüber der Umgebung, wobei der abzudichtende Raum zumindest teilweise mit einem abzudichtenden Medium, zum Beispiel einem Schmiermittel, gefüllt ist.

Die Dichtlippe des vorbekannten Dichtrings ist einstückig sowie materialeinheitlich ausgebildet, besteht aus einem polymeren PTFE-Werkstoff und ist, ausgehend vom Stützkörper, axial in Richtung des abzudichtenden Raums vorgewölbt. Die Dichtlippe umschließt die Welle unter radialer Vorspannung dichtend.

Auf der der abzudichtenden Welle radial zugewandten Seite ist die Dichtlippe oftmals mit einer Förderstruktur zur Förderung des abzudichtenden Mediums axial in Richtung des abzudichtenden Raums versehen, wobei die Förderstruktur zum Beispiel durch einen Spiraldrall gebildet ist.

Dabei ist allerdings zu beachten, dass ein solcher Dichtring während seiner bestimmungsgemäßen Verwendung nur in einer Vorzugsdrehrichtung der abzudichtenden Welle abdichten kann. Bei einer Drehrichtung der abzudichtenden Welle entgegengesetzt zur Vorzugsdrehrichtung wird abzudichtendes Medium von der Förderstruktur aus dem abzudichtenden Raum unerwünscht in Richtung Umgebung gefördert. Bei stillstehender Welle kriecht das abzudichtende Medium vom abzudichtenden Raum entlang der Förderstruktur in die Umgebung. Der vorbekannte Dichtring erfüllt in den beschriebenen Fällen seine Funktion nicht.

Wegen der zuvor beschriebenen Gebrauchseigenschaften gelangen derartige Dichtringe nur dann zur Anwendung, wenn die abzudichtende Welle nur eine Drehrichtung hat.

PTFE-Werkstoffe für die Dichtlippe sind dann von Vorteil, wenn eine hohe Verschleißfestigkeit, eine gute Temperaturbeständigkeit und eine sehr gute Beständigkeit gegen das abzudichtende Medium gefordert sind.

### Darstellung der Erfindung

Der Erfindung liegt die Aufgabe zu Grunde, einen Dichtring und eine Dichtungsanordnung der vorbekannten Art derart weiterzuentwickeln, dass der Dichtring besser an die jeweiligen Gegebenheiten des Anwendungsfalles angepasst ist, insbesondere dass er das abzudichtende erste Maschinenelement nicht nur dynamisch sondern auch statisch abdichten kann. Undichtigkeiten bei dynamischer und statischer Abdichtung sollen dadurch ausgeschlossen sein und der Dichtring soll auch dann zur Anwendung gelangen können und sicher abdichten, wenn das erste Maschinenelement entgegengesetzt zu seiner Vorzugsdrehrichtung rotiert.

Diese Aufgabe wird erfindungsgemäß durch einen Dichtring mit den Merkmalen von Patentanspruch 1 und eine Dichtungsanordnung mit den Merkmalen von Patentanspruch 10 gelöst. Auf vorteilhafte Ausgestaltungen nehmen die darauf jeweils direkt oder indirekt rückbezogenen Ansprüche Bezug.

Zur Lösung der Aufgabe ist ein Dichtring vorgesehen, umfassend einen Stützkörper und eine Dichtlippe mit zumindest einem ersten und einem zweiten Dichtlippenabschnitt aus voneinander abweichenden Dichtungswerkstoffen, wobei der erste Dichtlippenabschnitt einerseits mit dem Stützkörper verbunden ist und andererseits ein freies Ende aufweist, an dem der zweite Dichtlippenabschnitt angeordnet ist und wobei der zweite Dichtlippenabschnitt aus einem elastomeren Dichtungswerkstoff besteht, wobei der erste Dichtlippenabschnitt auf der einer abzudichtenden Oberfläche eines abzudichtenden ersten Maschinenelements radial zugewandten Seite eine erste Förderstruktur zur Förderung von abzudichtendem Medium aufweist und/oder wobei der erste Dichtlippenabschnitt auf der einer abzudichtenden Oberfläche eines abzudichtenden ersten Maschinenelements radial abgewandten Seite eine weitere Förderstruktur aufweist und wobei der zweite Dichtlippenabschnitt auf der einer abzudichtenden Oberfläche eines abzudichtenden ersten Maschinenelements radial zugewandten Seite eine zweite Förderstruktur zur Förderung von abzudichtendem Medium aufweist.

Hierbei ist von Vorteil, dass der aus einem elastomeren Dichtungswerkstoff bestehende zweite Dichtlippenabschnitt für eine gute Abdichtung eines abzudichtenden Raums gegenüber der Umgebung auch dann sorgt, wenn das abzudichtende erste Maschinenelement, das zum Beispiel durch eine Welle gebildet ist, stillsteht oder entgegengesetzt zu einer Vorzugsdrehrichtung dreht, und das unabhängig davon, aus welchen Material der erste Dichtlippenabschnitt besteht. Ein solcher Dichtring kann besonders gut an die jeweiligen Gegebenheiten des Anwendungsfalles angepasst werden. Unabhängig davon, ob der erste Dichtlippenabschnitt für eine gute statische Abdichtung eines stillstehenden ersten Maschinenelements sorgen könnte und/oder für eine gute Dichtwirkung, falls das abzudichtende erste Maschinenelement entgegengesetzt zu einer Vorzugsdrehrichtung rotiert, übernimmt der aus dem elastomeren Dichtungswerkstoff bestehende zweite Dichtlippenabschnitt diese Aufgaben, so dass ein solcher Dichtring insgesamt unter allen Betriebsbedingungen für eine gute Abdichtung sorgt.

Der erste Dichtlippenabschnitt weist auf der einer abzudichtenden Oberfläche eines abzudichtenden ersten Maschinenelements radial zugewandten Seite eine erste Förderstruktur zur Förderung von abzudichtendem Medium auf. Durch die mit der ersten Förderstruktur versehene erste Dichtfläche wird unter dem ersten Dichtlippenabschnitt befindliches abzudichtendes Medium, das auch zur Schmierung des ersten Dichtlippenabschnitts und damit zur Reibungs- und Verschleißreduzierung genutzt werden kann, in den abzudichtenden Raum zurückgefördert. Leckage ist dadurch auf ein Minimum begrenzt.

Anstelle der ersten Förderstruktur oder zusätzlich zur ersten Förderstruktur ist es vorgesehen, dass der erste Dichtlippenabschnitt auf seiner einem abzudichtenden ersten Maschinenelement radial abgewandten Seite eine weitere Förderstruktur aufweist, die sich indirekt auf die erste Dichtfläche des ersten Dichtlippenabschnitts auswirkt. Eine solche weitere Förderstruktur führt zu einem Dickenunterschied des ersten Dichtlippenabschnitts entlang seiner Erstreckung, zu einem unterschiedlichen Anpressdruck, mit dem der erste Dichtlippenabschnitt entlang seiner Erstreckung an einer abzudichtenden Oberfläche anliegt und dadurch zu einem Druckgefälle im Dichtspalt zwischen dem ersten Dichtlippenabschnitt und der abzudichtende Oberfläche. Durch das Druckgefälle stellt sich während der bestimmungsgemäßen Verwendung des Dichtrings eine Pumpwirkung innerhalb des Dichtspalts ein. Überraschenderweise hat sich gezeigt, dass sich ein Druckgefälle innerhalb des Dichtspalts und eine daraus resultierende Pumpwirkung auch dann einstellen, wenn der erste Dichtlippenabschnitt auf der einer abzudichtenden Oberfläche eines abzudichtenden ersten Maschinenelements radial zugewandten Seite glatt im Sinne von "ohne erste Förderstruktur" ausgebildet ist.

Außerdem ist von Vorteil, dass die weitere Förderstruktur für ein gutes Anschmiegeverhalten der Dichtlippe an die abzudichtende Oberfläche sorgt. Gelangt der beanspruchte Dichtring als Wellendichtring zur Anwendung, ist die erste Förderstruktur innenumfangseitig der Dichtlippe auf der der abzudichtenden Welle zugewandten Seite, die weitere Förderstruktur außenumfangsseitig der Dichtlippe auf der der abzudichtenden Welle abgewandten Seite angeordnet.

Der zweite Dichtlippenabschnitt weist auf der einer abzudichtenden Oberfläche eines abzudichtenden ersten Maschinenelements radial zugewandten Seite eine zweite Förderstruktur zur Förderung von abzudichtendem Medium auf. Die zweite Förderstruktur kann, abhängig von den jeweiligen Gegebenheiten des Anwendungsfalles, eine Förderrichtung aufweisen, die, bezogen auf die erste Förderstruktur des ersten Dichtlippenabschnitts, entgegen- oder gleichgerichtet ist.

Ist die Förderrichtung der zweiten Förderstruktur im Bereich der zweiten Dichtfläche des zweiten Dichtlippenabschnitts entgegengerichtet zur Förderrichtung der ersten Förderstruktur, ist eine zuverlässige Abdichtung durch den Dichtring auch dann gewährleistet, wenn das abzudichtende erste Maschinenelement längere Zeit entgegengesetzt zur Vorzugsdrehrichtung rotiert. Eine Rotation des ersten abzudichtenden Maschinenelements entgegengesetzt zur Vorzugsdrehrichtung würde, wie eingangs beschrieben, normalerweise zu einer Förderung des abzudichtenden Mediums entlang der ersten Förderstruktur in die Umgebung sorgen.

Dadurch, dass die Förderrichtung der zweiten Förderstruktur entgegengesetzt zur Förderrichtung der ersten Förderstruktur ist, wird das abzudichtende Medium durch die zweite Förderstruktur in Richtung des abzudichtenden Raums zurückgefördert, wenn das abzudichtende erste Maschinenelement entgegengesetzt zur Vorzugsdrehrichtung rotiert.

Sind die Förderrichtungen der beiden Förderstrukturen gleichgerichtet, wirkt die zweite Förderstruktur des zweiten Dichtlippenabschnitts dichtunterstützend zur ersten Förderstruktur, wenn das abzudichtende Maschinenelement in Vorzugsdrehrichtung rotiert.

Dichtlippen mit Förderstrukturen sind allgemein bekannt, wobei die Förderstruktur zum Beispiel durch einen Spiraldrall gebildet ist.

Der zweite Dichtlippenabschnitt besteht bevorzugt aus einem weicheren Dichtungswerkstoff als der erste Dichtlippenabschnitt. Durch einen solchen vergleichsweise weicheren zweiten Dichtlippenabschnitt kann eine gute statische Abdichtung erreicht werden. Der vergleichsweise weichere Dichtungswerkstoff des zweiten Dichtlippenabschnitts umschließt ein abzudichtendes erstes Maschinenelement, zum Beispiel eine Welle, unter elastischer Vorspannung dichtend, wobei sich der vergleichsweise weichere Dichtungswerkstoff besonders gut an die abzudichtende Oberfläche anlegt und zuverlässig abdichtet.

Der erste Dichtlippenabschnitt besteht bevorzugt aus einem polymeren Werkstoff, zum Beispiel bevorzugt aus einem PTFE-Werkstoff. Solche Werkstoffe haben sich in der Dichtungstechnik ebenfalls, wie elastomere Werkstoffe, gut bewährt, insbesondere dann, wenn eine hohe Verschleißbeständigkeit, eine gute Beständigkeit gegen das abzudichtende Medium und eine hohe Temperaturbeständigkeit in einem weiten Temperaturbereich gefordert sind.

Durch die Kombination des polymeren Werkstoffs des ersten Dichtlippenabschnitts mit dem elastomeren Dichtungswerkstoff des zweiten Dichtlippenabschnitts wird der normalerweise bestehende Nachteil von Dichtlippen aus polymerem Werkstoff ausgeglichen, wonach Dichtlippen aus polymerem Werkstoff für eine statische Abdichtung bei stillstehendem ersten Maschinenelement nur unzureichend geeignet sind.

Die Verbindung von erstem und zweitem Dichtlippenabschnitt im Bereich des freien Endes des ersten Dichtlippenabschnitts kann stoff- und/oder formschlüssig erfolgen. Insbesondere dann, wenn der erste Dichtlippenabschnitt aus einem PTFE-Werkstoff besteht, der sich eigentlich nicht so gut mit elastomeren Werkstoffen verbinden lässt, ist von Vorteil, wenn im Bereich des freien Endes zusätzlich zur stoffschlüssigen Verbindung eine Art mechanische Verkrallung vorgesehen ist, um eine sichere und dauerhaltbare Verbindung der Dichtlippenabschnitte aneinander zu erreichen.

Gemäß einer vorteilhaften Ausgestaltung kann es vorgesehen sein, dass der Stützkörper einen Stützkern mit einem Axialschenkel und einem Radialschenkel umfasst, wobei der Stützkern bevorzugt aus einem metallischen Wertstoff besteht. Stützkerne aus einem metallischen Werkstoff sind einfach und kostengünstig herstellbar.

Der Stützkern sorgt für eine gute Formbeständigkeit des Dichtrings und einen ausreichend festen uns dauerhaften Sitz des Dichtrings in seinem Einbauraum. Der Stützkern kann zumindest teilweise von einem elastomeren Werkstoff ummantelt sein, wobei diese Ummantelung eine Begrenzungswandung des Einbauraums des Dichtrings unter elastischer Vorspannung dichtend berührt. Die Begrenzungswandung kann zum Beispiel eine Bohrung in einem Gehäuse begrenzen, wobei der Dichtring in die Bohrung des Gehäuses eingepresst ist. Der zweite Dichtlippenabschnitt kann auf der einer abzudichtenden Oberfläche eines abzudichtenden ersten Maschinenelements radial zugewandten Seite und auf der dem ersten Dichtlippenabschnitt axial abgewandten Seite einen umfangsseitig umlaufenden, in sich geschlossenen Dichtwulst aufweisen. Hierbei ist von Vorteil, dass der in sich geschlossene Dichtwulst eine besonders zuverlässige statische Abdichtung des abzudichtenden Raums gegenüber der Umgebung bewirkt. Durch den, bezogen auf den ersten Dichtlippenabschnitt, weicheren elastomeren Werkstoff des zweiten Dichtlippenabschnitts, dichtet der Dichtwulst besonders gut auf der abzudichtenden Oberfläche ab. Auch bei einer Rotation des abzudichtenden ersten Maschinenelements entgegengesetzt zur Vorzugsdrehrichtung sorgt der in sich geschlossene Dichtwulst dafür, dass das abzudichtende Medium sicher innerhalb des abzudichtenden Raums zurückgehalten wird.

Die zweite Förderstruktur kann, in axialer Richtung betrachtet, zwischen dem Dichtwulst und dem freien Ende des ersten Dichtlippenabschnitts angeordnet sein. Der Dichtwulst bildet dann den Abschluss der Dichtlippe auf der dem Stützkörper abgewandten Seite. Unter Dichtwulst im Sinne der vorliegenden Anmeldung wird eine umfangsseitig umlaufende, in sich geschlossene Dichtspur des zweiten Dichtlippenabschnitts verstanden.

Nach einer anderen Ausgestaltung kann die zweite Förderstruktur, in axialer Richtung betrachtet, auf der dem freien Ende abgewandten Seite des Dichtwulsts angeordnet sein. Hierbei ist von Vorteil, dass der vergleichsweise empfindliche elastomere Dichtungswerkstoff während des Übergangs vom stillstehenden ersten Maschinenelement zum rotierenden ersten Maschinenelement von Anfang an bereits gut geschmiert ist. In der zweiten Förderstruktur befindet sich bei stillstehendem ersten Maschinenelement abzudichtendes Medium, das durch den in Richtung Umgebung anschließenden Dichtwulst innerhalb des abzudichtenden Raums zurückgehalten wird.

Wie zuvor bereits ausgeführt, kann es vorgesehen sein, dass die erste und die zweite Förderstruktur während der bestimmungsgemäßen Verwendung des Dichtrings jeweils eine Förderrichtung aufweisen, die gleich oder entgegengesetzt zueinander ist.

Außerdem betrifft die Erfindung eine Dichtungsanordnung, umfassend einen Dichtring, wie zuvor beschrieben, sowie ein abzudichtendes erstes Maschinenelement und ein abzudichtendes zweites Maschinenelement, die einander konzentrisch und mit radialem Abstand zugeordnet sind, wobei in dem durch den Abstand gebildeten Spalt der Dichtring angeordnet ist.

Die Dichtlippenabschnitte umschließen das erste Maschinenelement jeweils mit radialer Vorspannung dichtend, wobei der Stützkörper das zweite Maschinenelement unter radialer Vorspannung dichtend berührt. Der Dichtring ist dadurch dichtend innerhalb seines Einbauraums angeordnet.

Bei einer Dichtungsanordnung wie zuvor beschrieben, kann das erste Maschinenelement durch eine abzudichtende Welle gebildet sein und das zweite Maschinenelement durch ein das erste Maschinenelement umschließendes Gehäuse.

Das erste Maschinenelement, das zweite Maschinenelement und der Dichtring begrenzen einen mit abzudichtendem Medium zumindest teilweise gefüllten abzudichtenden Raum, wobei die Dichtlippe bevorzugt axial in Richtung des abzudichtenden Raums vorgewölbt ausgebildet ist. Für die meisten Anwendungsfälle ist eine solche Dichtungsanordnung besonders gut geeignet.

### Kurzbeschreibung der Zeichnung

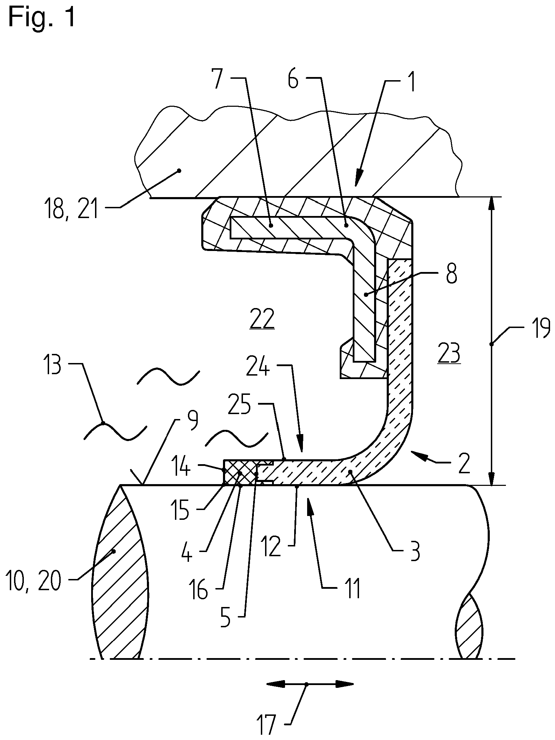

Zwei Ausführungsbeispiele der erfindungsgemäßen Dichtungsanordnung jeweils mit dem erfindungsgemäßen Dichtring sind in den Figuren 1 und 2 schematisch dargestellt und werden nachfolgend näher beschrieben.

### Ausführung der Erfindung

In den Figuren 1 und 2 ist jeweils ein Ausführungsbeispiel der erfindungsgemäßen Dichtungsanordnung mit dem erfindungsgemäßen Dichtring gezeigt.

Die Dichtungsanordnung umfasst neben dem Dichtring das abzudichtende erste Maschinenelement 10, das durch eine abzudichtende Welle 20 gebildet ist. Außerdem umfasst die Dichtungsanordnung das zweite abzudichtende Maschinenelement 18, das durch ein Gehäuse 21 gebildet ist. Das Gehäuse 21 und die abzudichtende Welle 20 sind einander konzentrisch und mit radialem Abstand zugeordnet. Durch den radialen Abstand wird ein Spalt 19 gebildet, in dem der erfindungsgemäße Dichtring angeordnet ist.

Der Dichtring umfasst den Stützkörper 1, der durch den Stützkern 6 mit seinem Axialschenkel 7 und seinem Radialschenkel 8 gebildet ist. Der Stützkern 6 besteht im gezeigten Ausführungsbeispiel aus einem metallischen Werkstoff und ist im Wesentlichen von elastomerem Werkstoff ummantelt. Diese Ummantelung aus elastomerem Werkstoff bewirkt eine statische Abdichtung des Dichtrings gegenüber dem Gehäuse 21.

Radial innenseitig umschließt die Dichtlippe 2 des Dichtrings die abzudichtende Oberfläche 9 der Welle 20 unter radialer Vorspannung dichtend. Erfindungsgemäß ist es vorgesehen, dass die Dichtlippe 2 die beiden Dichtlippenabschnitte 3, 4 umfasst, die aus voneinander abweichenden Dichtungswerkstoffen bestehen. Der erste Dichtlippenabschnitt 3 besteht aus einem PTFE-Werkstoff, der zweite Dichtlippenabschnitt 4 demgegenüber aus einem elastomeren Dichtungswerkstoff, der, bezogen auf den ersten Dichtlippenabschnitt 3, weicher ist.

Der erste Dichtlippenabschnitt 3 bewirkt eine dynamische Abdichtung der in einer Vorzugsdrehrichtung rotierenden Welle 20, der zweite Dichtlippenabschnitt 4 außerdem zusätzlich eine statische Abdichtung, wenn die Welle 20 steht oder entgegengesetzt zur Vorzugsdrehrichtung rotiert. Hierbei ist von Vorteil, dass mit nur einer Dichtlippe 2 beide Betriebszustände, nämlich "rotierendes abzudichtendes erstes Maschinenelement 10" und "stillstehendes abzudichtendes erstes Maschinenelement 10", abgedichtet werden können. Die Funktion des Dichtrings ist durch dessen erfindungsgemäße Ausgestaltung auch dann gut, wenn die abzudichtende Welle 20 entgegengesetzt zu ihrer Vorzugsdrehrichtung rotiert.

Der erste Dichtlippenabschnitt 3 weist auf seiner der abzudichtenden Oberfläche 9 radial zugewandten Seite 11 die erste Förderstruktur 12 auf. Diese erste Förderstruktur 12 bewirkt während der bestimmungsgemäßen Verwendung des Dichtrings, wenn die Welle 20 in ihrer Vorzugsdrehrichtung rotiert, eine Förderung des abzudichtenden Mediums 13 von unter der Dichtlippe 2 axial in Richtung des abzudichtenden Raums 22.

Die erste Förderstruktur kann durch einen Spiraldrall in der ersten Dichtfläche des ersten Dichtlippenabschnitts 3 gebildet sein.

In den gezeigten Ausführungsbeispielen ist außerdem die weitere Förderstruktur 24 vorgesehen, die auf der der ersten Förderstruktur 12 radial abgewandten Seite des ersten Dichtlippenabschnitts 3 angeordnet ist.

In den gezeigten Ausführungsbeispielen weist auch der zweite Dichtlippenabschnitt 4 eine Förderstruktur 16 auf. Auch die zweite Förderstruktur 16 kann als Spiraldrall ausgebildet sein.

Je nachdem, wie die Förderrichtung der zweiten Förderstruktur 16 ist, kann die zweite Förderstruktur 16 die Wirkung der ersten Förderstruktur 12 unterstützen, nämlich dann, wenn sich die abzudichtende Welle 20 in Vorzugsdrehrichtung dreht. In diesem Fall wird abzudichtendes Medium 13, das sich zwischen der abzudichtenden Oberfläche 9 und den Dichtflächen der Dichtlippe 2 befindet und zur Schmierung der Dichtlippe 2 dient, axial in Richtung des abzudichtenden Raums 22 zurückgefördert.

Ist die Förderrichtung der zweiten Förderstruktur 16 demgegenüber entgegengerichtet zur Förderrichtung der ersten Förderstruktur 12, bewirkt die zweite Förderstruktur 16, bei Drehrichtung der abzudichtenden Welle 20 entgegengesetzt zur Vorzugsdrehrichtung, dass die Abdichtung auch bei einer solchen "Rückwärtsfahrt" gegeben ist. Bei einer Drehrichtung der Welle 20 entgegengesetzt zur Vorzugsdrehrichtung wird das unter der zweiten Dichtfläche befindliche abzudichtende Medium 13 durch die zweite Förderstruktur 16 in den abzudichtenden Raum 22 zurückgefördert.

Unabhängig von der Förderrichtung der zweiten Förderstruktur 16 ist der zweite Dichtlippenabschnitt 4 mit einem umfangsseitig umlaufenden, in sich geschlossenen Dichtwulst 15 versehen, der bei stillstehender Welle 20 eine statische Dichtung bildet und verhindert, dass abzudichtendes Medium 13 aus dem abzudichtenden Raum 22 entlang der ersten Förderstruktur 12 des ersten Dichtlippenabschnitts 3 in die Umgebung 23 gelangt.

In Figur 1 ist ein erstes Ausführungsbeispiel schematisch dargestellt. Der zweite Dichtlippenabschnitt 4 ist zusätzlich zu einer stoffschlüssigen Verbindung durch eine Art mechanische Verkrallung mit dem freien Ende 5 des ersten Dichtlippenabschnitts 3 verbunden.

In Figur 2 ist ein zweites Ausführungsbeispiel schematisch dargestellt. Der erste 3 und der zweite Dichtlippenabschnitt 4 sind auf Stoß miteinander verbunden.

## Patentansprüche

1. Dichtring, umfassend einen Stützkörper (1) und eine Dichtlippe (2) mit zumindest einem ersten (3) und einem zweiten Dichtlippenabschnitt (4) aus voneinander abweichenden Dichtungswerkstoffen, wobei der erste Dichtlippenabschnitt (3) einerseits mit dem Stützkörper (1) verbunden ist und andererseits ein freies Ende (5) aufweist, an dem der zweite Dichtlippenabschnitt (4) angeordnet ist und wobei der zweite Dichtlippenabschnitt (4) aus einem elastomeren Dichtungswerkstoff besteht, **dadurch gekennzeichnet, dass** der erste Dichtlippenabschnitt (3) auf der einer abzudichtenden Oberfläche (9) eines abzudichtenden ersten Maschinenelements (10) radial zugewandten Seite (11) eine erste Förderstruktur (12) zur Förderung von abzudichtendem Medium (13) aufweist und/oder dass der erste Dichtlippenabschnitt (3) auf der einer abzudichtenden Oberfläche (9) eines abzudichtenden ersten Maschinenelements (10) radial abgewandten Seite (24) eine weitere Förderstruktur (25) aufweist und dass der zweite Dichtlippenabschnitt (4) auf der einer abzudichtenden Oberfläche (9) eines abzudichtenden ersten Maschinenelements (10) radial zugewandten Seite (11) eine zweite Förderstruktur (16) zur Förderung von abzudichtendem Medium (13) aufweist.

2. Dichtring nach Anspruch 1, **dadurch gekennzeichnet, dass** die zweite Förderstruktur (16), in axialer Richtung (17) betrachtet, zwischen dem Dichtwulst (15) und dem freien Ende (5) angeordnet ist.

3. Dichtring nach einem der voranstehenden Ansprüche, **dadurch gekennzeichnet, dass** die erste (12) und die zweite Förderstruktur (14) während der bestimmungsgemäßen Verwendung des Dichtrings jeweils eine Förderrichtung aufweisen, die gleich oder entgegengesetzt zueinander ist.

4. Dichtring nach einem der voranstehenden Ansprüche, **dadurch gekennzeichnet, dass** der zweite Dichtlippenabschnitt (4) aus einem weicheren Dichtungswerkstoff als der erste Dichtlippenabschnitt (3) besteht.

5. Dichtring nach einem der voranstehenden Ansprüche, **dadurch gekennzeichnet, dass** der erste Dichtlippenabschnitt (3) aus einem polymeren Werkstoff besteht.

6. Dichtring nach einem der voranstehenden Ansprüche, **dadurch gekennzeichnet, dass** der erste Dichtlippenabschnitt (3) aus einem PTFE-Werkstoff besteht.

7. Dichtring nach einem der voranstehenden Ansprüche, **dadurch gekennzeichnet, dass** der erste (3) und der zweite Dichtlippenabschnitt (4) stoff- und/oder formschlüssig verbunden sind.

8. Dichtring nach einem der voranstehenden Ansprüche, **dadurch gekennzeichnet, dass** der Stützkörper (1) einen Stützkern (6) mit einem Axialschenkel (7) und einem Radialschenkel (8) umfasst und dass der Stützkern (6) aus einem metallischen Werkstoffe besteht.

9. Dichtring nach einem der voranstehenden Ansprüche, **dadurch gekennzeichnet, dass** der zweite Dichtlippenabschnitt (4) auf der einer abzudichtenden Oberfläche (9) eines abzudichtenden ersten Maschinenelements (10) radial zugewandten Seite (11) und auf der dem ersten Dichtlippenabschnitt (3) axial abgewandten Seite (14) einen umfangseitig umlaufenden, in sich geschlossenen Dichtwulst (15) aufweist.

10. Dichtungsanordnung, umfassend einen Dichtring nach einem der Ansprüche 1 bis 9 sowie ein abzudichtendes erstes Maschinenelement (10) und ein abzudichtendes zweites Maschinenelement (18), die einander konzentrisch und mit radialem Abstand zugeordnet sind, wobei in dem durch den Abstand gebildeten Spalt (19) der Dichtring angeordnet ist.

11. Dichtungsanordnung nach Anspruch 10, **dadurch gekennzeichnet, dass** die Dichtlippenabschnitte (3, 4) das erste Maschinenelement (10) mit radialer Vorspannung dichtend umschließen und dass der Stützkörper (1) das zweite Maschinenelement (18) unter radialer Vorspannung dichtend berührt.

12. Dichtungsanordnung nach einem der voranstehenden Ansprüche, **dadurch gekennzeichnet, dass** das erste Maschinenelement (10) durch eine abzudichtende Welle (20) gebildet ist und das zweite Maschinenelement (18) durch ein das erste Maschinenelement (10) umschließendes Gehäuse (21).

13. Dichtungsanordnung nach einem der voranstehenden Ansprüche, **dadurch gekennzeichnet, dass** das erste Maschinenelement (10), das zweite Maschinenelement (18) und der Dichtring einen mit dem abzudichtenden Medium (13) zumindest teilweise gefüllten abzudichtenden Raum (22) begrenzen und dass die Dichtlippe (2) axial in Richtung des abzudichtenden Raums (22) vorgewölbt ausgebildet ist.

## Claims

1. Sealing ring, comprising a support body (1) and a sealing lip (2) with at least one first (3) and one second sealing lip portion (4) composed of mutually different seal materials, wherein the first sealing lip portion (3), at one side, is connected to the support body (1) and, at the other side, has a free end (5) at which the second sealing lip portion (4) is arranged, and wherein the second sealing lip portion (4) is composed of an elastomer seal material, **characterized in that** the first sealing lip portion (3), on that side (11) which radially faces towards a surface (9), which is to be sealed off, of a first machine element (10) which is to be sealed off, has a first conveying structure (12) for conveying medium (13) which is to be sealed off, and/or **in that** the first sealing lip portion (3), on that side (24) which radially faces away from a surface (9), which is to be sealed off, of a first machine element (10) which is to be sealed off, has a further conveying structure (25), and **in that** the second sealing lip portion (4), on that side (11) which radially faces towards a surface (9), which is to be sealed off, of a first machine element (10) which is to be sealed off, has a second conveying structure (16) for conveying medium (13) which is to be sealed off.

2. Sealing ring according to Claim 1, **characterized in that** the second conveying structure (16) is arranged between the sealing bead (15) and the free end (5) as viewed in an axial direction (17).

3. Sealing ring according to one of the preceding claims, **characterized in that** the first (12) and the second conveying structure (14) have a respective conveying direction during the intended use of the sealing ring, which conveying directions are in the same direction or in opposite directions in relation to one another.

4. Sealing ring according to one of the preceding claims, **characterized in that** the second sealing lip portion (4) is composed of a softer seal material than the first sealing lip portion (3).

5. Sealing ring according to one of the preceding claims, **characterized in that** the first sealing lip portion (3) is composed of a polymer material.

6. Sealing ring according to one of the preceding claims, **characterized in that** the first sealing lip portion (3) is composed of a PTFE material.

7. Sealing ring according to one of the preceding claims, **characterized in that** the first (3) and the second sealing lip portion (4) are connected to one another in cohesive and/or positively locking fashion.

8. Sealing ring according to one of the preceding claims, **characterized in that** the support body (1) comprises a support core (6) with an axial limb (7) and a radial limb (8), and **in that** the support core (6) is composed of a metallic material.

9. Sealing ring according to one of the preceding claims, **characterized in that** the second sealing lip portion (4), on that side (11) which radially faces towards a surface (9), which is to be sealed off, of a first machine element (10) which is to be sealed off, and on that side (14) which axially faces away from the first sealing lip portion (3), has an encirclingly closed sealing bead (15) running around the circumference.

10. Seal arrangement, comprising a sealing ring according to one of Claims 1 to 9 and a first machine element (10) which is to be sealed off and a second machine element (18) which is to be sealed off, which machine elements are arranged concentrically with respect to one another and with a radial spacing, wherein the sealing ring is arranged in the gap (19) formed by the spacing.

11. Seal arrangement according to Claim 10, **characterized in that** the sealing lip portions (3, 4) sealingly surround the first machine element (10) with radial preload, and **in that** the support body (1) sealingly make contact with the second machine element (18) under radial preload.

12. Seal arrangement according to one of the preceding claims, **characterized in that** the first machine element (10) is formed by a shaft (20) which is to be sealed off, and the second machine element (18) is formed by a housing (21) which surrounds the first machine element (10).

13. Seal arrangement according to one of the preceding claims, **characterized in that** the first machine element (10), the second machine element (18) and the sealing ring delimit a space (22) which is to be sealed off, which space is at least partially filled with the medium (13) which is to be sealed off, and **in that** the sealing lip (2) is formed so as to be curved forwards axially in the direction of the space (22) which is to be sealed off.

## Revendications

1. Bague d'étanchéité, comprenant un corps de support (1) et une lèvre d'étanchéité (2) avec au moins une première (3) et une deuxième (4) portion de lèvre d'étanchéité constituées de matériaux d'étanchéité différents l'un de l'autre, la première portion de lèvre d'étanchéité (3) étant d'une part connectée au corps de support (1) et présentant d'autre part une extrémité libre (5) au niveau de laquelle est disposée la deuxième portion de lèvre d'étanchéité (4), et la deuxième portion de lèvre d'étanchéité (4) se composant d'un matériau d'étanchéité élastomère, **caractérisée en ce que** la première portion de lèvre d'étanchéité (3) présente, sur le côté (11) tourné radialement vers une surface à étanchéifier (9) d'un premier élément de machine à étanchéifier (10), une première structure de transport (12) pour transporter le milieu à étanchéifier (13) et/ou **en ce que** la première portion de lèvre d'étanchéité (3) présente, sur le côté (24) opposé radialement à une surface à étanchéifier (9) d'un premier élément de machine à étanchéifier (10), une structure de transport supplémentaire (25) et **en ce que** la deuxième portion de lèvre d'étanchéité (4) présente, sur le côté (11) tourné radialement vers une surface à étanchéifier (9) d'un premier élément de machine à étanchéifier (10), une deuxième structure de transport (16) pour le transport de milieu à étanchéifier (13).

2. Bague d'étanchéité selon la revendication 1, **caractérisée en ce que** la deuxième structure de transport (16), vu dans la direction axiale (17), est disposée entre le bourrelet d'étanchéité (15) et l'extrémité libre (5).

3. Bague d'étanchéité selon l'une quelconque des revendications précédentes, **caractérisée en ce que** la première (12) et la deuxième (14) structure de transport, lors de l'utilisation conforme de la bague d'étanchéité, présentent à chaque fois des directions de transport identiques ou opposées l'une à l'autre.

4. Bague d'étanchéité selon l'une quelconque des revendications précédentes, **caractérisée en ce que** la deuxième portion de lèvre d'étanchéité (4) se compose d'un matériau d'étanchéité plus souple que la première portion de lèvre d'étanchéité (3).

5. Bague d'étanchéité selon l'une quelconque des revendications précédentes, **caractérisée en ce que** la première portion de lèvre d'étanchéité (3) se compose d'un matériau polymère.

6. Bague d'étanchéité selon l'une quelconque des revendications précédentes, **caractérisée en ce que** la première portion de lèvre d'étanchéité (3) se compose d'un matériau en PTFE.

7. Bague d'étanchéité selon l'une quelconque des revendications précédentes, **caractérisée en ce que** la première (3) et la deuxième (4) portion de lèvre d'étanchéité sont connectées par engagement par liaison de matière et/ou par correspondance de formes.

8. Bague d'étanchéité selon l'une quelconque des revendications précédentes, **caractérisée en ce que** le corps de support (1) comprend un noyau de support (6) avec une branche axiale (7) et une branche radiale (8) et **en ce que** le noyau de support (6) se compose d'un matériau métallique.

9. Bague d'étanchéité selon l'une quelconque des revendications précédentes, **caractérisée en ce que** la deuxième portion de lèvre d'étanchéité (4) présente, sur le côté (11) tourné radialement vers une surface à étanchéifier (9) d'un premier élément de machine à étanchéifier (10) et sur le côté (14) opposé axialement à la première portion de lèvre d'étanchéité (3), un bourrelet d'étanchéité (15) refermé sur lui-même et s'étendant sur la périphérie.

10. Agencement d'étanchéité comprenant une bague d'étanchéité selon l'une quelconque des revendications 1 à 9, ainsi qu'un premier élément de machine à étanchéifier (10) et un deuxième élément de machine à étanchéifier (18) qui sont associés l'un à l'autre concentriquement et avec un espacement radial, la bague d'étanchéité étant disposée dans l'interstice (19) formé par l'espacement.

11. Agencement d'étanchéité selon la revendication 10, **caractérisé en ce que** les portions de lèvre d'étanchéité (3, 4) entourent hermétiquement le premier élément de machine (10) avec une précontrainte radiale et **en ce que** le corps de support (1) vient en contact hermétique avec le deuxième élément de machine (18) avec précontrainte radiale.

12. Agencement d'étanchéité selon l'une quelconque des revendications précédentes, **caractérisé en ce que** le premier élément de machine (10) est formé par un arbre à étanchéifier (20) et le deuxième élément de machine (18) est formé par un boîtier (21) entourant le premier élément de machine (10).

13. Agencement d'étanchéité selon l'une quelconque des revendications précédentes, **caractérisé en ce que** le premier élément de machine (10), le deuxième élément de machine (18) et la bague d'étanchéité délimitent un espace à étanchéifier (22) rempli au moins en partie avec le milieu à étanchéifier (13) et **en ce que** la lèvre d'étanchéité (2) est réalisée axialement avec un précintrage dans la direction de l'espace à étanchéifier (22).
